# EUROPEAN PATENT APPLICATION

(11) **EP 4 625 765 A1**
(43) Date of publication of application: **01.10.2025**
(21) Application number: 25166134.4
(22) Date of filing: 25.03.2025
(51) Int. Cl.: H02K 1/14, H02K 3/18, H02K 3/52, H02K 41/03

(54) **STATOR ASSEMBLY, LINEAR MOTOR, ELECTROMAGNETIC SUSPENSION, AND VEHICLE**

(30) Priority: 29.03.2024 CN 202410384561
(71) Applicant: BYD Company Limited, Shenzhen, Guangdong 518118 (CN)
(72) Inventor: MA, Bingqing, Shenzhen, 518118 (CN); DENG, Jiangqi, Shenzhen, 518118 (CN); QI, Wenming, Shenzhen, 518118 (CN)
(74) Representative: Taor, Simon Edward William

(57) **Abstract**

The present invention discloses a stator assembly, a linear motor, an electromagnetic suspension, and a vehicle. The stator assembly includes a stator core and a stator coil. The stator core includes multiple sub-cores successively arranged in an axial direction. A stator slot is formed between two adjacent sub-cores. The stator coil includes a pancake coil and a bridge wire, the pancake coil is accommodated in the stator slot, and pancake coils of a same phase are connected by using corresponding bridge wires. A wire passing slot configured for the bridge wire to pass through is provided on an outer peripheral wall of the sub-core. In a circumferential direction of the sub-core, a maximum length of a first projection of a first core convex portion on a first reference plane in a reference direction is less than a minimum distance between a second projection of a first phase bridge wire on the first reference plane and a third projection of a second phase bridge wire on the first reference plane. According to the stator assembly in embodiments of the present invention, assembly of the stator coil and the stator core is convenient, and scratching of the bridge wire by the stator core during the assembly of the stator core and the stator coil may be reduced.

## Description

### FIELD

The present invention relates to the field of vehicle technologies, and more specifically, to a stator assembly, a linear motor, an electromagnetic suspension, and a vehicle.

### BACKGROUND

In the related art, a stator coil of a linear motor is generally wound into a pancake coil and then embedded in a stator slot of a stator core. Multiple pancake coils of a same phase are connected by using a bridge wire. The bridge wire is located on an outer peripheral side of the stator core. For a three-phase linear motor or a linear motor of even more phases, efficient assembly of a stator assembly is still a problem.

### SUMMARY

Embodiments of the present invention aim to resolve at least one of the technical problems in the related art. Based on this, an objective of some embodiments of the present invention is to provide a stator assembly. A wire passing slot configured to avoid a bridge wire is provided on an outer peripheral wall of a stator core. In addition, in a circumferential direction of the stator core, a projection of a first core convex portion on a first reference plane is a first projection, a projection of a first phase bridge wire on the first reference plane is a second projection, a projection of a second phase bridge wire on the first reference plane is a third projection, and a maximum length of the first projection in a reference direction is less than a minimum distance between the second projection and the third projection. In this way, assembly of a stator coil and the stator core can be convenient, possibility of the stator core causing damage to the bridge wire during the assembly of the stator core and the stator coil can be reduced, and an overall structure of the stator assembly can be compact.

Embodiments of the present invention provide a linear motor including the foregoing stator assembly.

Embodiments of the present invention rovide an electromagnetic suspension including the foregoing linear motor.

Embodiments of the present invention provides a vehicle including the foregoing electromagnetic suspension.

According to an embodiment of a first aspect of the present invention, a stator assembly includes: a stator core, including multiple sub-cores successively arranged in an axial direction, a stator slot being formed between two adjacent sub-cores; and a stator coil, mounted on the stator core and including at least three phases of coils, each phase of coil including a pancake coil and a bridge wire, the pancake coil being accommodated in the stator slot, pancake coils of a same phase located in different stator slots being connected by using corresponding bridge wires, and the bridge wires of the at least three phases of coils being arranged at intervals in a circumferential direction of the stator core and including a first phase bridge wire, a second phase bridge wire, and a third phase bridge wire. A wire passing slot configured for the bridge wire to pass through is provided on an outer peripheral wall of the sub-core, a portion of the sub-core located between two adjacent wire passing slots in a circumferential direction of the sub-core is a core convex portion, a core convex portion located between the first phase bridge wire and the second phase bridge wire is a first core convex portion, a midpoint of the first core convex portion in the circumferential direction of the sub-core is a first convex block midpoint, a line connecting a center of the sub-core and the first convex block midpoint is a first radial reference line, a plane perpendicular to the first radial reference line is a first reference plane, a projection of the first core convex portion on the first reference plane is a first projection, a projection of the first phase bridge wire on the first reference plane is a second projection, a projection of the second phase bridge wire on the first reference plane is a third projection, a maximum length of the first projection in a reference direction is less than a minimum distance between the second projection and the third projection, and the reference direction is perpendicular to the first radial reference line and is perpendicular to the axial direction of the stator core.

According to the stator assembly of the embodiment of the present invention, the wire passing slot configured to avoid the bridge wire is provided on the outer peripheral wall of the stator core. In addition, in the circumferential direction of the stator core, the projection of the first core convex portion on the first reference plane is the first projection, the projection of the first phase bridge wire on the first reference plane is the second projection, the projection of the second phase bridge wire on the first reference plane is the third projection, and the maximum length of the first projection in the reference direction is less than the minimum distance between the second projection and the third projection. In this way, assembly of the stator coil and the stator core can be convenient, possibility of the stator core causing damage to the bridge wire during the assembly of the stator core and the stator coil can be reduced, and an overall structure of the stator assembly can be compact.

According to some embodiments of the present invention, a projection of the wire passing slot on a second reference plane is a fourth projection, the second reference plane is perpendicular to the axial direction of the stator core, the fourth projection includes two slot side edges arranged opposite to each other in the circumferential direction of the sub-core, and a spacing between the two slot side edges of the fourth projection gradually increases in a radial outward direction from the sub-core.

According to some embodiments of the present invention, at least a part of the slot side edge is arc-shaped.

According to some embodiments of the present invention, the fourth projection includes a slot bottom edge, the slot bottom edge is connected between the two slot side edges, and the slot bottom edge extends in a straight line.

According to some embodiments of the present invention, a transition section is connected between the slot bottom edge and the slot side edge, and the transition section is arc-shaped.

According to some embodiments of the present invention, the bridge wire is completely accommodated in the corresponding wire passing slot in a radial direction of the sub-core.

According to some embodiments of the present invention, the bridge wire is covered by an insulating layer.

According to some embodiments of the present invention, the pancake coils of the same phase and the bridge wires connecting the pancake coils of the same phase are integrally formed.

According to some embodiments of the present invention, the multiple sub-cores, the multiple pancake coils, and the bridge wires are bonded together by using an adhesive.

According to some embodiments of the present invention, the stator assembly further includes: an insulating bracket. The insulating bracket is arranged in the stator slot and covers the pancake coil.

According to some embodiments of the present invention, the insulating bracket includes a bracket body, the bracket body is annular and extends in the circumferential direction of the stator core, a wire passing notch configured for the bridge wire to pass through is formed on the bracket body, and the wire passing notch is opposite to the wire passing slot in the axial direction of the stator core.

According to some embodiments of the present invention, the insulating bracket further includes an extension portion, the extension portion is connected to the bracket body and is located on an axial side of the wire passing notch, and at least a part of the extension portion is located in the wire passing slot and is located between the bridge wire and the sub-core.

According to some embodiments of the present invention, the extension portion is recessed toward a center of the bracket body, to form an accommodating slot configured to accommodate the bridge wire.

According to some embodiments of the present invention, a maximum outer diameter of the bracket body is not greater than a maximum outer diameter of the sub-core.

According to some embodiments of the present invention, a portion of the bracket body located between two adjacent wire passing notches in a circumferential direction of the bracket body is a bracket convex portion, a bracket convex portion located between the first phase bridge wire and the second phase bridge wire is a first bracket convex portion, a projection of the first bracket convex portion on the first reference plane is a fifth projection, and a maximum length of the fifth projection in the reference direction is less than the minimum distance between the second projection and the third projection.

According to an embodiment of a second aspect of the present invention, a linear motor includes: the stator assembly according to the embodiment of the foregoing first aspect of the present invention; and a mover assembly, sleeved on an outer periphery of the stator assembly, the mover assembly and the stator assembly being movable relative to each other.

According to the linear motor in this embodiment of the present invention, the foregoing stator assembly is arranged. A wire passing slot configured to avoid a bridge wire is provided on an outer peripheral wall of a stator core. In addition, in a circumferential direction of the stator core, a projection of a first core convex portion on a first reference plane is a first projection, a projection of a first phase bridge wire on the first reference plane is a second projection, a projection of a second phase bridge wire on the first reference plane is a third projection, and a maximum length of the first projection in a reference direction is less than a minimum distance between the second projection and the third projection. In this way, assembly of a stator coil and the stator core can be convenient, possibility of the stator core causing damage to the bridge wire during the assembly of the stator core and the stator coil can be reduced, and an overall structure of the stator assembly can be compact.

According to an embodiment of a third aspect of the present invention, an electromagnetic suspension includes the linear motor according to the embodiment of the foregoing second aspect of the present invention.

According to the electromagnetic suspension in this embodiment of the present invention, the foregoing linear motor is arranged. A wire passing slot configured to avoid a bridge wire is provided on an outer peripheral wall of a stator core. In addition, in a circumferential direction of the stator core, a projection of a first core convex portion on a first reference plane is a first projection, a projection of a first phase bridge wire on the first reference plane is a second projection, a projection of a second phase bridge wire on the first reference plane is a third projection, and a maximum length of the first projection in a reference direction is less than a minimum distance between the second projection and the third projection. In this way, assembly of a stator coil and the stator core can be convenient, possibility of the stator core causing damage to the bridge wire during the assembly of the stator core and the stator coil can be reduced, and an overall structure of the stator assembly can be compact.

According to an embodiment of a fourth aspect of the present invention, a vehicle includes the electromagnetic suspension according to the embodiment of the foregoing third aspect of the present invention.

According to the vehicle in this embodiment of the present invention, the foregoing electromagnetic suspension is arranged, the electromagnetic suspension includes a linear motor, and the linear motor includes a stator assembly. A wire passing slot configured to avoid the bridge wire is provided on an outer peripheral wall of a stator core. In addition, in a circumferential direction of the stator core, a projection of a first core convex portion on a first reference plane is a first projection, a projection of a first phase bridge wire on the first reference plane is a second projection, a projection of a second phase bridge wire on the first reference plane is a third projection, and a maximum length of the first projection in a reference direction is less than a minimum distance between the second projection and the third projection. In this way, assembly of a stator coil and the stator core can be convenient, possibility of the stator core causing damage to the bridge wire during the assembly of the stator core and the stator coil can be reduced, and an overall structure of the stator assembly can be compact.

Additional aspects and advantages of the present invention are partially provided in the following description, and partially become apparent in the following description or understood through the practice of the present invention.

### BRIEF DESCRIPTION OF THE DRAWINGS

The foregoing and/or additional aspects and advantages of embodiments of the present invention will become apparent and comprehensible in the description of the embodiments made with reference to the following accompanying drawings.
FIG. 1 is a cross-sectional view of a linear motor according to some embodiments of the present invention;
FIG. 2 is a main view of assembly of a stator assembly and a stator mandrel in the linear motor in FIG. 1;
FIG. 3 is a partial cross-sectional view of the stator assembly and the stator mandrel in the linear motor in FIG. 1;
FIG. 4 is an enlarged diagram of a part A in FIG. 3;
FIG. 5 is a three-dimensional schematic diagram of the stator assembly in the linear motor in FIG. 1;
FIG. 6 is a schematic diagram of assembly of a stator coil, a stator core, and an insulating bracket of the stator assembly in FIG. 1;
FIG. 7 is a three-dimensional schematic diagram of the stator core of the stator assembly in FIG. 1;
FIG. 8 is a cross-sectional view of the stator core of the stator assembly in FIG. 1; and
FIG. 9 is a top view of cooperation of the stator core and a bridge wire of the stator assembly in FIG. 1.

### DETAILED DESCRIPTION

Embodiments of the present invention are described in detail below, and examples of the embodiments are shown in the accompanying drawings, where the same or similar elements or the elements having same or similar functions are denoted by the same or similar reference numerals throughout the description. The embodiments that are described with reference to the accompanying drawings are exemplary, and are used only for explaining the present invention, and should not be construed as a limitation on the present invention.

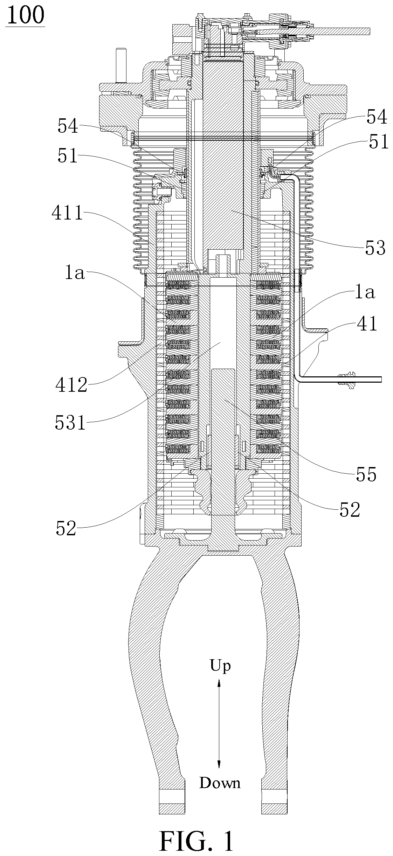

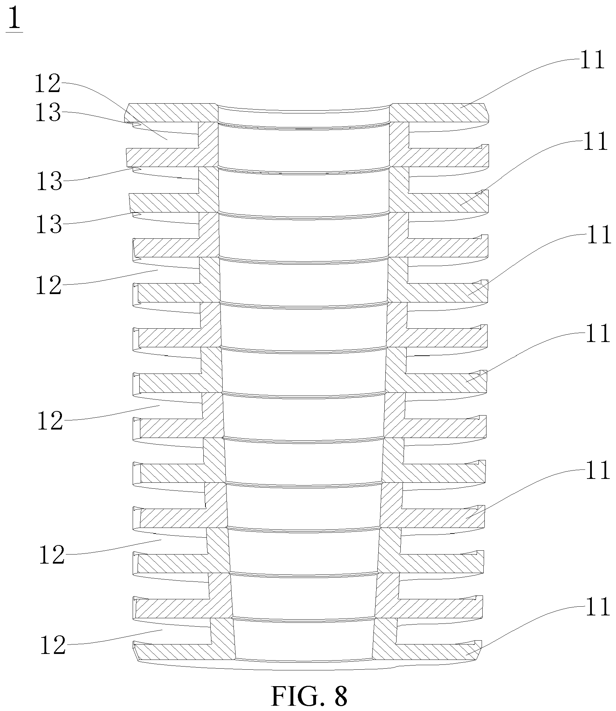

A stator assembly 1a according to the embodiments of the present invention is described below with reference to FIG. 1 to FIG. 9.

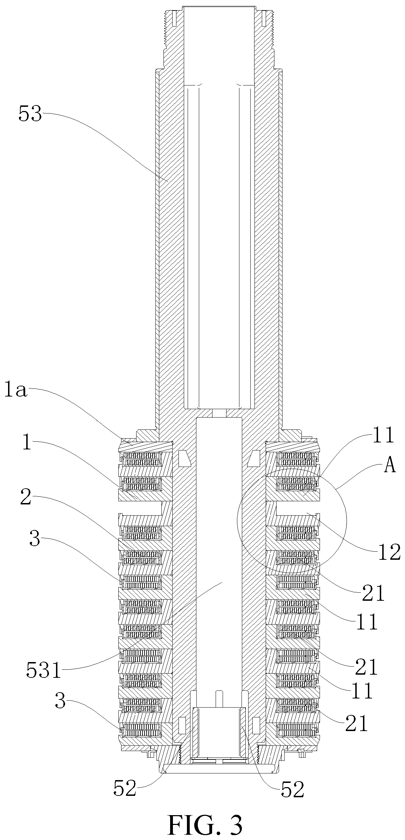

Referring to FIG. 3, FIG. 5, and FIG. 9, a stator assembly 1a according to an embodiment of a first aspect of the present invention includes: a stator core 1 and a stator coil 2. The stator core 1 includes multiple sub-cores 11 successively arranged in an axial direction. A stator slot 12 is formed between two adjacent sub-cores 11. The stator coil 2 is mounted on the stator core 1 and the stator coil 2 includes at least three phases of coils, each phase of coil includes a pancake coil 21 and a bridge wire 22, the pancake coil 21 is accommodated in the stator slot 12, and a layer of the pancake coil 21 or multiple layers of pancake coils 21 arranged in the axial direction of the stator core 1 may be accommodated in each stator slot 12. The bridge wire 22 may be located on an outer peripheral side of the stator core 1, pancake coils 21 of a same phase located in different stator slots 12 are connected by using corresponding bridge wires 22, the bridge wires 22 of the at least three phases of coils are arranged at intervals in a circumferential direction of the stator core 1, and the bridge wires 22 include a first phase bridge wire 221, a second phase bridge wire 222, and a third phase bridge wire 223.

A three-phase linear motor might have the stator assembly 1a. The stator coil 2 of the stator assembly 1a includes three phases of coils. The three phases of coils are a first phase coil 23, a second phase coil 24, and a third phase coil 25 respectively. Correspondingly, the first phase coil 23 may be a U phase coil, the second phase coil 24 may be a V phase coil, and the third phase coil 25 may be a W phase coil. The first phase coil 23 includes the first phase bridge wire 221, the second phase coil 24 includes the second phase bridge wire 222, and the third phase coil 25 includes the third phase bridge wire 223.

The first phase bridge wire 221, the second phase bridge wire 222, and the third phase bridge wire 223 are arranged at intervals in the circumferential direction of the stator core 1, and any two of the first phase bridge wire 221, the second phase bridge wire 222, and the third phase bridge wire 223 are arranged at 120°. A pancake coil 21 in the first phase coil 23 is a first phase pancake coil, and first phase pancake coils located in different stator slots 12 in the first phase coil 23 are connected by using the first phase bridge wire 221. A pancake coil 21 in the second phase coil 24 is a second phase pancake coil, and second phase pancake coils located in different stator slots 12 in the second phase coil 24 are connected by using the second phase bridge wire 222. A pancake coil 21 in the third phase coil 25 is a third phase pancake coil, and third phase pancake coils located in different stator slots 12 in the third phase coil 25 are connected by using the third phase bridge wire 223.

A wire passing slot 13 configured for the bridge wire 22 to pass through is provided on an outer peripheral wall of the sub-core 11, three wire passing slots 13 arranged at intervals in a circumferential direction of the sub-core 11 may be provided on the outer peripheral wall of the sub-core 11, and the three wire passing slots 13 respectively are a first phase wire passing slot, a second phase wire passing slot, and a third phase wire passing slot. The wire passing slot 13 may facilitate passing of the bridge wire 22, and the wire passing slot 13 may also protect the bridge wire 22 to a certain extent, so that possibility of the bridge wire 22 scratching an external component of the stator assembly 1a due to protruding radially outward may be reduced. In addition, an overall structure of the bridge wire 22 and the wire passing slot 13 may be compact, so that an overall structure of the stator assembly 1a is compact.

The multiple sub-cores 11 include a first phase sub-core, a second phase sub-core, and a third phase sub-core. The first phase sub-core, the second phase sub-core, and the third phase sub-core are arranged in the axial direction of the stator core 1.

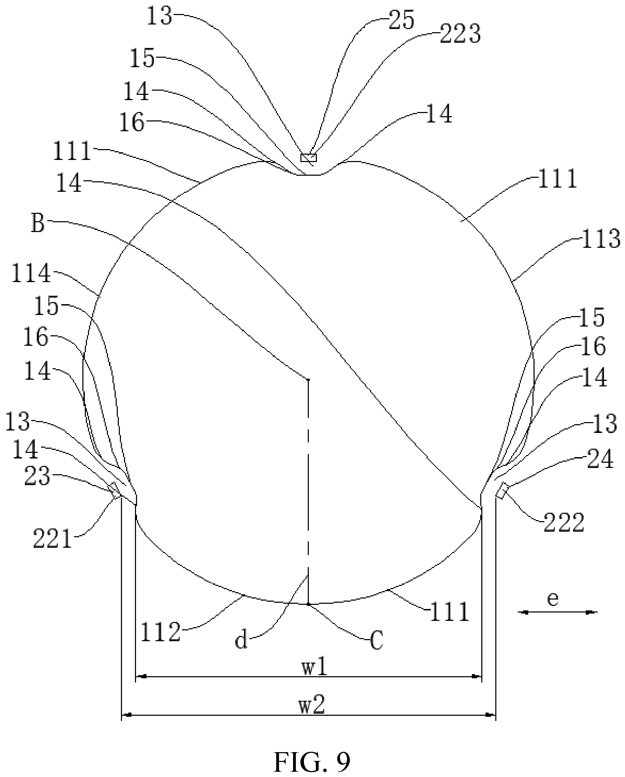

Referring to FIG. 9, a portion of each phase of sub-core 11 located between two adjacent wire passing slots 13 in the circumferential direction of the sub-core 11 is a core convex portion 111, a core convex portion 111 located between the first phase bridge wire 221 and the second phase bridge wire 222 is a first core convex portion 112, a core convex portion 111 located between the second phase bridge wire 222 and the third phase bridge wire 223 is a second core convex portion 113, and a core convex portion 111 located between the third phase bridge wire 223 and the first phase bridge wire 221 is a third core convex portion 114.

A midpoint of the first core convex portion 112 in the circumferential direction of the sub-core 11 is a first convex block midpoint C, a line connecting a center B of the sub-core 11 and the first convex block midpoint C is a first radial reference line d, a plane perpendicular to the first radial reference line d is a first reference plane, a projection of the first core convex portion 112 on the first reference plane is a first projection, a projection of the first phase bridge wire 221 on the first reference plane is a second projection, a projection of the second phase bridge wire 222 on the first reference plane is a third projection, a maximum length w1 of the first projection in a reference direction e is less than a minimum distance w2 between the second projection and the third projection, and the reference direction e is perpendicular to the first radial reference line d and the reference direction e is perpendicular to the axial direction of the stator core 1. In this way, the first phase bridge wire 221 and the second phase bridge wire 222 may pass through two adjacent wire passing slots 13, so that assembly of the stator core 1 and the stator coil 2 is convenient. In addition, possibility of the stator core 1 scratching the first phase bridge wire 221 or the second phase bridge wire 222 when the first phase bridge wire 221 and the second phase bridge wire 222 pass through the two adjacent wire passing slots 13 during the assembly of the stator core 1 and the stator coil 2 may be reduced.

An example in which the stator assembly 1a is used in a three-phase linear motor is used. The stator assembly 1a includes a first phase sub-assembly, a second phase sub-assembly, and a third phase sub-assembly. The first phase sub-assembly includes the first phase coil 23 and the first phase sub-core, the first phase coil 23 includes the first phase pancake coil and the first phase bridge wire 221, the first phase bridge wire 221 connects multiple first phase pancake coils successively arranged in the axial direction, and the first phase sub-core supports the first phase pancake coil. The second phase sub-assembly includes the second phase coil 24 and the second phase sub-core, the second phase coil 24 includes the second phase pancake coil and the second phase bridge wire 222, the second phase bridge wire 222 connects multiple second phase pancake coils successively arranged in the axial direction, and the second phase sub-core supports the second phase pancake coil. The third phase sub-assembly includes the third phase coil 25 and the third phase sub-core, the third phase coil 25 includes the third phase pancake coil and the third phase bridge wire 223, the third phase bridge wire 223 connects multiple third phase pancake coils successively arranged in the axial direction, and the third phase sub-core supports the third phase pancake coil.

The first phase wire passing slot, the second phase wire passing slot, and the third phase wire passing slot are provided on each phase of sub-core, and in the axial direction, all the first phase wire passing slots correspond to each other, all the second phase wire passing slots correspond to each other, and all the third phase wire passing slots correspond to each other.

The first phase pancake coil, the second phase pancake coil, and the third phase pancake coil are successively arranged in the axial direction. With the three in a group, multiple groups are successively arranged in the axial direction. For example, if the first phase coil 23 includes four first phase pancake coils, the second phase coil 24 includes four second phase pancake coils, and the third phase coil 25 includes four third phase pancake coils, the first phase pancake coils, the second phase pancake coils, and the third phase pancake coils are successively arranged in the axial direction in four groups.

During assembly, firstly, the second phase sub-assembly is radially inserted into the first phase sub-assembly and space is reserved for the third phase sub-assembly to be inserted. After assembly of the second phase sub-assembly and the first phase sub-assembly is completed, the first phase bridge wire 221 and the second phase bridge wire 222 are distributed at 120°, and the first phase bridge wire 221 and the second phase bridge wire 222 are respectively located in the first phase wire passing slot and the second phase wire passing slot. When the third phase sub-assembly is inserted, the first core convex portion 112 between the first phase wire passing slot and the second phase wire passing slot on the third phase sub-core needs to be inserted in space between the first phase bridge wire 221 and the second phase bridge wire 222. During the insertion, the first core convex portion 112 on the third phase sub-core does not contact the first phase bridge wire 221 and the second phase bridge wire 222.

A specific assembly process is described as follows.

The first phase coil 23, the second phase coil 24, and the third phase coil 25 might be manufactured.

The first phase pancake coil in the first phase coil 23 is mounted on the first phase sub-core, the first phase sub-core supports the first phase pancake coil, and the first phase bridge wire 221 passes through the first phase wire passing slot and forms the first phase sub-assembly through assembly with the first phase sub-core. The first phase bridge wire 221 passes through the first phase wire passing slot, so that scratching of the first phase bridge wire 221 by the first phase sub-core may be reduced. The second phase pancake coil in the second phase coil 24 is mounted on the second phase sub-core, the second phase sub-core supports the second phase pancake coil, and the second phase bridge wire 222 passes through the second phase wire passing slot and forms the second phase sub-assembly through assembly with the second phase sub-core. The second phase bridge wire 222 passes through the second phase wire passing slot, so that scratching of the second phase bridge wire 222 by the second phase sub-core may be reduced. The third phase pancake coil in the third phase coil 25 is mounted on the third phase sub-core, the third phase sub-core supports the third phase pancake coil, and the third phase bridge wire 223 passes through the third phase wire passing slot and forms the third phase sub-assembly through assembly with the third phase sub-core. The third phase bridge wire 223 passes through the third phase wire passing slot, so that scratching of the third phase bridge wire 223 by the third phase sub-core may be reduced.

The second phase sub-assembly might inserted into the first phase sub-assembly in a radial direction of the stator core 1 and space is reserved for the third phase sub-assembly to be inserted. After assembly of the first phase sub-assembly and the second phase sub-assembly is completed, in this case, the first phase bridge wire 221 and the second phase bridge wire 222 are distributed at 120°, and the first phase bridge wire 221 and the second phase bridge wire 222 are respectively located in the first phase wire passing slot and the second phase wire passing slot.

The third phase sub-assembly might be inserted between the assembled first phase sub-assembly and the assembled second phase sub-assembly in the radial direction of the stator core 1, and the first core convex portion 112 between the first phase wire passing slot and the second phase wire passing slot on the third phase sub-core needs to pass through space between the first phase bridge wire 221 and the second phase bridge wire 222. During the insertion, the first core convex portion 112 of the third phase sub-core does not contact the first phase bridge wire 221 and the second phase bridge wire 222.

The maximum length w1 of the first projection of the first core convex portion 112 on the first reference plane in the reference direction is less than the minimum distance w2 between the second projection of the first phase bridge wire 221 on the first reference plane and the third projection of the second phase bridge wire 222 on the first reference plane. In this way, during insertion of the third phase sub-assembly between the assembled first phase sub-assembly and the assembled second phase sub-assembly in the radial direction of the stator core 1, the first core convex portion 112 of the third phase sub-core may be prevented from contacting the first phase bridge wire 221 and the second phase bridge wire 222, so that assembling the third phase sub-assembly on the first phase sub-assembly and the second phase sub-assembly is efficient, and scratching of the first phase bridge wire 221 or the second phase bridge wire 222 by the third phase sub-core during the insertion of the third phase sub-assembly between the first phase sub-assembly and the second phase sub-assembly may be reduced.

In the description of the embodiments of the present invention, "multiple" means two or more.

According to the stator assembly 1a according to the embodiment of the present invention, the wire passing slot 13 configured to avoid the bridge wire 22 is provided on the outer peripheral wall of the stator core 1. In addition, in the circumferential direction of the stator core 1, the projection of the first core convex portion 111 on the first reference plane is the first projection, the projection of the first phase bridge wire 221 on the first reference plane is the second projection, the projection of the second phase bridge wire 222 on the first reference plane is the third projection, and the maximum length of the first projection in the reference direction is less than the minimum distance between the second projection and the third projection. In this way, assembly of the stator coil 2 and the stator core 1 can be convenient, possibility of the stator core 1 causing damage to the bridge wire 22 during the assembly of the stator core 1 and the stator coil 2 can be reduced, and an overall structure of the stator assembly 1a can be compact.

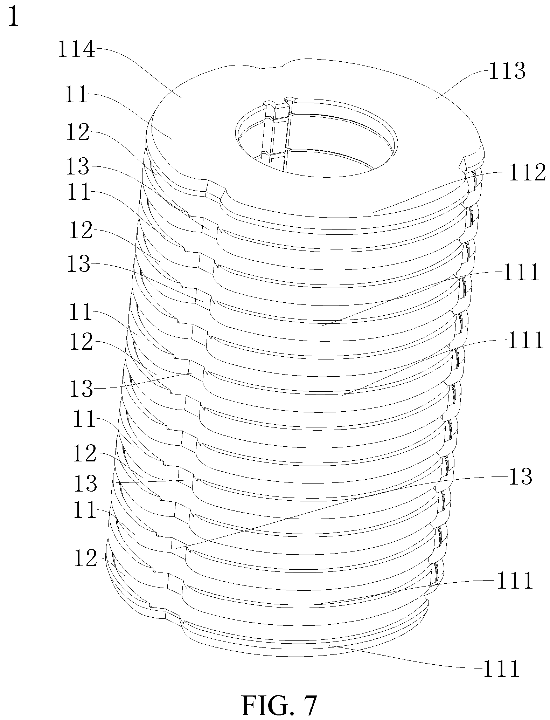

Referring to FIG. 7 and FIG. 9, according to some embodiments of the present invention, a projection of the wire passing slot 13 on a second reference plane is a fourth projection, the second reference plane is perpendicular to the axial direction of the stator core 1, the fourth projection includes two slot side edges 14 arranged opposite to each other in the circumferential direction of the sub-core 11, and a spacing between the two slot side edges 14 of the fourth projection gradually increases in a radial outward direction from the sub-core 11. In this way, an opening of the wire passing slot 13 may be expanded and opened, so that the bridge wire 22 connecting the pancake coils 21 of the same phase may pass through the wire passing slot 13 conveniently, and the possibility of scratching of the bridge wire 22 by the stator core 1 when the bridge wire 22 passes through the wire passing slot 13 is reduced.

Referring to FIG. 7 and FIG. 9, according to some embodiments of the present invention, at least a part of the slot side edge 14 is arc-shaped, and during the assembly of the stator core 1 and the stator coil 2, the scratching of the bridge wire 22 by the stator core 1 when the bridge wire 22 passes through the wire passing slot 13 may be reduced.

That at least a part of the slot side edge 14 is arc-shaped may include the following cases. For example, the entire slot side edge 14 may be arc-shaped. For another example, a part of the slot side edge 14 is arc-shaped.

Referring to FIG. 7 and FIG. 9, according to some embodiments of the present invention, the fourth projection includes a slot bottom edge 15, the slot bottom edge 15 is connected between the two slot side edges 14, and the slot bottom edge 15 extends in a straight line. For example, the slot bottom edge 15 extends in a straight line in the circumferential direction of the sub-core 11. The bridge wire 22 is flat, and this is convenient for the bridge wire 22 to pass through the wire passing slot 13, to reduce the scratching of the bridge wire 22 by the stator core 1.

Referring to FIG. 7 and FIG. 9, according to some embodiments of the present invention, a transition section 16 is connected between the slot bottom edge 15 and the slot side edge 14, and the transition section 16 is arc-shaped, so that the slot side edge 14 and the slot bottom edge 15 of the wire passing slot 13 are in a smooth transition. In this way, during the assembly of the stator core 1 and the stator coil 2, the scratching of the bridge wire 22 by the stator core 1 when the bridge wire 22 passes through the wire passing slot 13 may be reduced.

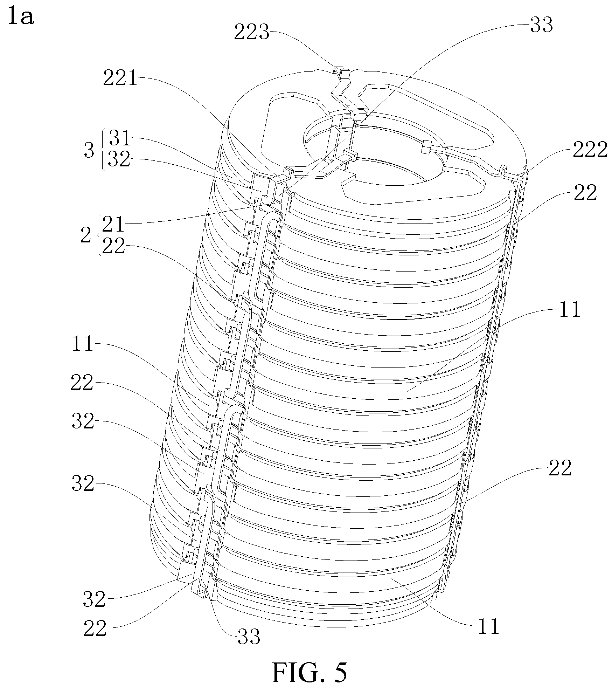

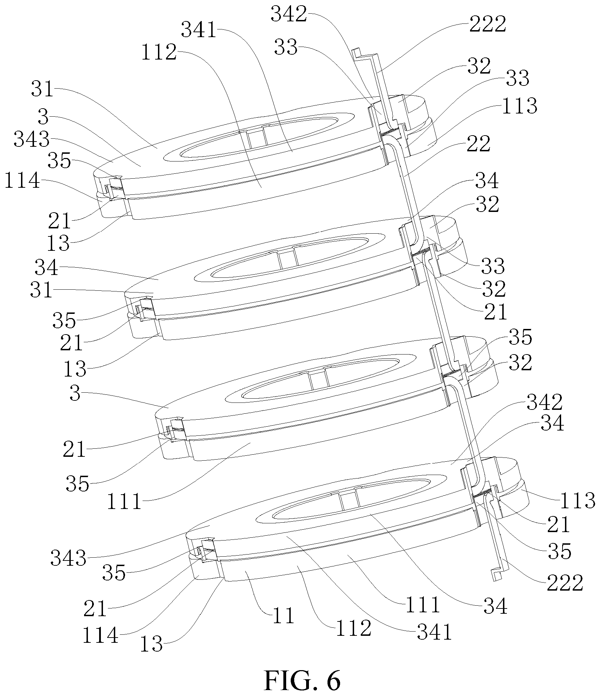

Referring to FIG. 5 and FIG. 6, according to some embodiments of the present invention, the bridge wire 22 is completely accommodated in the corresponding wire passing slot 13 in a radial direction of the sub-core 11. For example, a projection of the bridge wire 22 on the second reference plane is located in a projection of the corresponding wire passing slot 13 on the second reference plane, and the second reference plane is perpendicular to the axial direction of the stator core 1. The bridge wire 22 is completely located in the corresponding wire passing slot 13 in the radial direction of the sub-core 11, so that an overall structure of the bridge wire 22 and the stator core 1 is compact, and the bridge wire 22 may be prevented from scratching an external component due to protruding outward in the radial direction of the stator core 1.

According to some embodiments of the present invention, the bridge wire 22 is covered by an insulating layer. The insulating layer may insulate the bridge wire 22 and avoid an electrical connection due to direct contact between the bridge wire 22 and the sub-core 11. In addition, the insulating layer may protect the bridge wire 22 and may prevent the stator core 1 from scratching the bridge wire 22 during the assembly of the stator coil 2 and the stator core 1.

Referring to FIG. 5 and FIG. 6, according to some embodiments of the present invention, the pancake coils 21 of the same phase and the bridge wires 22 connecting the pancake coils 21 of the same phase are integrally formed. This can enhance overall structural strength of the stator coil 2. In addition, because the pancake coils 21 of the same phase are connected by using the bridge wires 22, and the pancake coils 21 of the same phase and the bridge wires 22 connecting the pancake coils 21 of the same phase are integrally formed, a process of welding the pancake coils 21 of the same phase and the bridge wires 22 connecting pancake coils 21 of the same phase may be omitted during the assembly of the stator coil 2, to improve efficiency of the assembly of the stator coil 2.

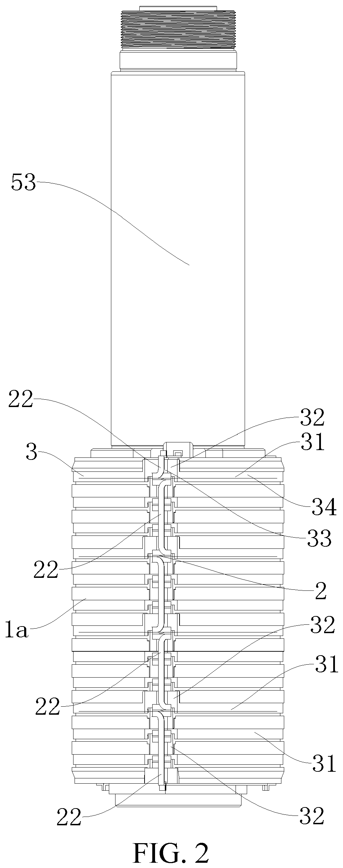

Referring to FIG. 2, according some embodiments of the present invention, the multiple sub-cores 11, the multiple pancake coils 21, and the bridge wires 22 are bonded together by using an adhesive. The multiple sub-cores 11, the multiple pancake coils 21, and the bridge wires 22 are assembled to form the stator assembly 1a. The entire stator assembly 1a is bonded by using the adhesive, so that overall structural strength of the stator assembly 1a and stability of connection among the multiple sub-cores 11, the multiple pancake coils 21, and the bridge wires 22 may be improved. For example, when a linear motor 100 is run, possibility of falling of the bridge wire 22 due to vibration of the linear motor 100 may be reduced. In addition, an insulating protective layer may be formed on the entire stator assembly 1a, to provide all-round protection for the entire stator assembly 1a.

A resist might be arranged between two turns of wires in the pancake coil 21. The resist can further insulate the two turns of wires in the pancake coil 21, and can further fix the coil.

Referring to FIG. 5 and FIG. 6, according to some embodiments of the present invention, the stator assembly 1a further includes: an insulating bracket 3. The insulating bracket 3 is arranged in the stator slot 12, and the insulating bracket 3 covers the pancake coil 21. The insulating bracket 3 is located in the stator slot 12 and covers the pancake coil 21. The insulating bracket can insulate and protect the pancake coil 21 located in the stator slot 12, to avoid an electrical connection due to direct contact between the pancake coil 21 and the stator core 1.

Referring to FIG. 5 and FIG. 6, according to some embodiments of the present invention, the insulating bracket 3 includes a bracket body 31, the bracket body 31 is annular and extends in the circumferential direction of the stator core 1, a wire passing notch 35 configured for the bridge wire 22 to pass through is formed on the bracket body 31, and the wire passing notch 35 is opposite to the wire passing slot 13 in the axial direction of the stator core 1. The wire passing notch 35 may accommodate and avoid the bridge wire 22, to facilitate passing of the bridge wire 22 through the wire passing notch 35. In addition, an overall structure of the bridge wire 22 and the insulating bracket 3 is compact, and the bridge wire 22 is prevented from scratching the external component due to protruding outward in the radial direction of the stator core 1.

Referring to FIG. 5 and FIG. 6, according to some embodiments of the present invention, the insulating bracket 3 further includes an extension portion 32. The extension portion 32 is connected to the bracket body 31 and the extension portion 32 is located on an axial side of the wire passing notch 35. At least a part of the extension portion 32 is located in the wire passing slot 13 and the extension portion 32 is located between the bridge wire 22 and the sub-core 11. The extension portion 32 may insulate the bridge wire 22, and may avoid an electrical connection due to direct contact between the bridge wire 22 and the sub-core 11. In addition, the extension portion 32 may protect the bridge wire 22, and possibility of the stator core 1 scratching the bridge wire 22 during the assembly of the stator coil 2 and the stator core 1 may be reduced.

That at least a part of the extension portion 32 is located in the wire passing slot 13 may include the following cases. For example, the entire extension portion 32 may be located in the wire passing slot 13. For another example, a part of the extension portion 32 may be located in the wire passing slot 13.

Referring to FIG. 5 and FIG. 6, according to some embodiments of the present invention, the extension portion 32 is recessed toward a center of the bracket body 31, to form an accommodating slot 33 configured to accommodate the bridge wire 22. The accommodating slot 33 may accommodate and avoid the bridge wire 22, so that the bridge wire 22 passes through the accommodating slot 33, and an overall structure of the bridge wire 22 and the extension portion 32 is compact.

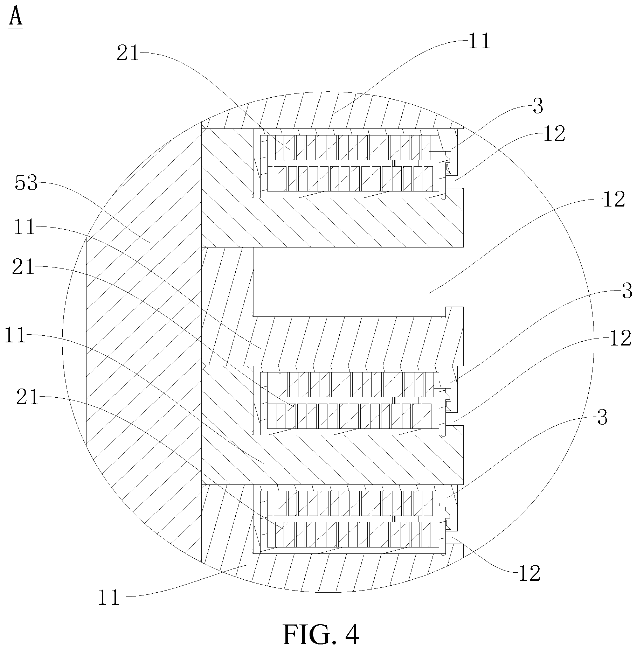

Referring to FIG. 4 to FIG. 6, according to some embodiments of the present invention, a maximum outer diameter of the bracket body 31 is not greater than a maximum outer diameter of the sub-core 11. This can ensure that the bracket body 31 does not protrude from the sub-core 11, interference between the bracket body 31 and an external component of the sub-core 11 can be avoided, and an overall structure of the bracket body 31 and the sub-core 11 is compact, so that an overall structure of the insulating bracket 3 and the stator core 1 is compact.

Referring to FIG. 4 to FIG. 6, according to some embodiments of the present invention, a portion of the bracket body 31 located between two adjacent wire passing notches 35 in a circumferential direction of the bracket body 31 is a bracket convex portion 34, a bracket convex portion 34 located between the first phase bridge wire 221 and the second phase bridge wire 222 is a first bracket convex portion 341, a bracket convex portion 34 located between the second phase bridge wire 222 and the third phase bridge wire 223 is a second bracket convex portion 342, and a bracket convex portion 34 located between the third phase bridge wire 223 and the first phase bridge wire 221 is a third bracket convex portion 343.

A projection of the first bracket convex portion 341 on the first reference plane is a fifth projection, a maximum length of the fifth projection in the reference direction e is less than the minimum distance w2 between the second projection and the third projection. This can facilitate assembling the first bracket convex portion 341 between the first phase bridge wire 221 and the second phase bridge wire 222, to improve efficiency of assembly between the stator coil 2 and the insulating bracket 3. In addition, an overall structure of the stator assembly 1a can be compact.

An insulating bracket 3 covering the first phase pancake coil is a first insulating bracket, an insulating bracket 3 covering the second phase pancake coil is a second insulating bracket, and an insulating bracket 3 covering the third phase pancake coil is a third insulating bracket.

An example in which the stator assembly 1a is used in a three-phase linear motor is used. The stator assembly 1a includes a first phase sub-assembly, a second phase sub-assembly, and a third phase sub-assembly. The first phase sub-assembly includes the first phase coil 23, the first phase sub-core, and the first insulating bracket, the first phase coil 23 includes the first phase pancake coil and the first phase bridge wire 221, the first phase bridge wire 221 connects multiple first phase pancake coils successively arranged in the axial direction, and the first phase sub-core supports the first phase pancake coil and the first insulating bracket. The second phase sub-assembly includes the second phase coil 24, the second phase sub-core, and the second insulating bracket, the second phase coil 24 includes the second phase pancake coil and the second phase bridge wire 222, the second phase bridge wire 222 connects multiple second phase pancake coils successively arranged in the axial direction, and the second phase sub-core supports the second phase pancake coil and the second insulating bracket. The third phase sub-assembly includes the third phase coil 25, the third phase sub-core, and the third insulating bracket, the third phase coil 25 includes the third phase pancake coil and the third phase bridge wire 223, the third phase bridge wire 223 connects multiple third phase pancake coils successively arranged in the axial direction, and the third phase sub-core supports the third phase pancake coil and the third insulating bracket.

An assembly process of the stator coil 2 and the stator core 1 of the stator assembly 1a is described as follows.

Firstly, the first phase coil 23, the second phase coil 24, and the third phase coil 25 are manufactured.

The first insulating bracket covers the first phase pancake coil in the first phase coil 23, the first phase bridge wire 221 passes through the wire passing notch 35 at the first insulating bracket, the first phase pancake coil covered by the first insulating bracket in the first phase coil 23 is mounted in the first phase sub-core, the first phase sub-core supports the first phase pancake coil and the first insulating bracket that are assembled with the first phase sub-core to form the first phase sub-assembly, and the first phase bridge wire 221 passes through the first phase wire passing slot.

The second insulating bracket covers the second phase pancake coil in the second phase coil 24, the second phase bridge wire 222 passes through the wire passing notch 35 at the second insulating bracket, the second phase pancake coil covered by the second insulating bracket in the second phase coil 24 is mounted in the second phase sub-core, the second phase sub-core supports the second phase pancake coil and the second insulating bracket that are assembled with the second phase sub-core to form the second phase sub-assembly, and the second phase bridge wire 222 passes through the second phase wire passing slot.

The third insulating bracket covers the third phase pancake coil in the third phase coil 25, the third phase bridge wire 223 passes through the wire passing notch 35 at the third insulating bracket, the third phase pancake coil covered by the third insulating bracket in the third phase coil 25 is mounted in the third phase sub-core, the third phase sub-core supports the third phase pancake coil and the third insulating bracket that are assembled with the third phase sub-core to form the third phase sub-assembly, and the third phase bridge wire 223 passes through the third phase wire passing slot.

Secondly, the second phase sub-assembly is inserted into the first phase sub-assembly in a radial direction of the stator core 1 and space is reserved for the third phase sub-assembly to be inserted. After assembly of the first phase sub-assembly and the second phase sub-assembly is completed, in this case, the first phase bridge wire 221 and the second phase bridge wire 222 are distributed at 120°, and the first phase bridge wire 221 and the second phase bridge wire 222 are respectively located in the first phase wire passing slot and the second phase wire passing slot.

Finally, the third phase sub-assembly is inserted between the assembled first phase sub-assembly and the assembled second phase sub-assembly in the radial direction of the stator core 1, and the first core convex portion 112 between the first phase wire passing slot and the second phase wire passing slot on the third phase sub-core needs to pass through space between the first phase bridge wire 221 and the second phase bridge wire 222. The first core convex portion 112 of the third phase sub-core does not contact the first phase bridge wire 221 and the second phase bridge wire 222. In addition, the first bracket convex portion 341 of the third insulating bracket of the third phase sub-assembly needs to pass through the space between the first phase bridge wire 221 and the second phase bridge wire 222. Assembly among the third phase sub-assembly, the first phase sub-assembly, and the second phase sub-assembly is completed. In this case, the first phase bridge wire 221, the second phase bridge wire 222, and the third phase bridge wire 223 are arranged at intervals in the circumferential direction of the stator core 1.

The maximum length w1 of the first projection of the first core convex portion 112 on the first reference plane in the reference direction is less than the minimum distance w2 between the second projection of the first phase bridge wire 221 on the first reference plane and the third projection of the second phase bridge wire 222 on the first reference plane. This may be convenient for the first core convex portion 112 of the third phase sub-core to pass through the space between the first phase bridge wire 221 and the second phase bridge wire 222, so that assembly of the third phase sub-assembly on the first phase sub-assembly and the second phase sub-assembly is efficient, and scratching of the first phase bridge wire 221 or the second phase bridge wire 222 by the third phase sub-core during the insertion of the third phase sub-assembly between the first phase sub-assembly and the second phase sub-assembly may be reduced.

In addition, the maximum length of the fifth projection of the first bracket convex portion 341 on the first reference plane in the reference direction e is less than the minimum distance w2 between the second projection of the first phase bridge wire 221 on the first reference plane and the third projection of the second phase bridge wire 222 on the first reference plane. This may be convenient for the first bracket convex portion 341 of the insulating bracket 3 of the third phase sub-assembly to pass through the space between the first phase bridge wire 221 and the second phase bridge wire 222, so that assembly of the third phase sub-assembly on the first phase sub-assembly and the second phase sub-assembly is efficient.

Referring to FIG. 1, according to an embodiment of a second aspect of the present invention, a linear motor 100 includes: the stator assembly 1a according to the embodiment of the foregoing first aspect of the present invention and a mover assembly 41. The mover assembly 41 is sleeved on an outer periphery of the stator assembly 1a. The mover assembly 41 and the stator assembly 1a are movable relative to each other. When the linear motor 100 works, the stator assembly 1a and the mover assembly 41 relatively move in an axial direction of the linear motor 100.

In some embodiments, according to an embodiment of the present invention, the linear motor 100 includes the mover assembly 41, the stator assembly 1a, a stator mandrel 53, a guiding rod 55, a first bearing 51, a second bearing 52, and an oil seal 54. The stator assembly 1a is sleeved on an outer periphery pf the stator mandrel 53 and the stator assembly 1a is fixed relative to the stator mandrel 53. The mover assembly 41 is sleeved on the outer periphery of the stator assembly 1a. The mover assembly 41 and the stator assembly 1a may move relative to each other in an axial direction of the stator mandrel 53. The first bearing 51 and the oil seal 54 are mounted in the mover assembly 41 and are sleeved on the outer periphery of the stator mandrel 53. The first bearing 51 and the stator mandrel 53 cooperate to support the stator mandrel 53. This may enhance stability of the stator mandrel 53, and reduce vibration generated by the stator mandrel 53 when the linear motor 100 works. The oil seal 54 may prevent external impurities (such as dust and moisture) from entering an inside of the linear motor 100, thereby protecting an environment inside the linear motor 100.

The mover assembly 41 includes a motor housing 411, and the mover assembly 41 is fixed on an inner wall of the motor housing 411. The guiding rod 55 is arranged on the motor housing 411 and the guiding rod 55 extends in the axial direction of the stator mandrel 53. A guiding channel 531 extending in the axial direction of the stator mandrel 53 is formed on the stator mandrel 53. The guiding rod 55 is slidably accommodated in the guiding channel 531 in an axial direction of the stator assembly 1a. The guiding rod 55 may guide movement of the mover assembly 41. Through cooperation between the guiding channel 531 and the guiding rod 55, movement of the guiding rod 55 may be guided and limited, ensuring that the guiding rod 55 moves in a set direction and a set trajectory, preventing the guiding rod 55 from being separated from the stator mandrel 53 during sliding, thereby ensuring that the mover assembly 41 moves in the set direction and the set trajectory.

The second bearing 52 is located in the guiding channel 531 and the second bearing 52 is sleeved on an outer periphery of the guiding rod 55. The second bearing 52 is mounted on the stator mandrel 53. The second bearing 52 is mounted on the stator mandrel 53. The second bearing 52 and the stator mandrel 53 cooperate to support the stator mandrel 53. This may enhance stability of the stator mandrel 53, and reduce vibration generated by the stator mandrel 53 when the linear motor 100 works.

That when the linear motor 100 works, the stator assembly 1a and the mover assembly 41 relatively move in the axial direction of the linear motor 100 includes the following cases. For example, when the linear motor 100 works, the stator assembly 1a is stationary, and the mover assembly 41 moves in the axial direction of the linear motor 100. For another example, the mover assembly 41 is stationary, and the stator assembly 1a moves in the axial direction of the linear motor 100. For another example, both the stator assembly 1a and the mover assembly 41 move in the axial direction of the linear motor 100.

In some embodiments, the mover assembly 41 may be a primary assembly, and the stator assembly 1a may be a secondary assembly. Alternatively, the mover assembly 41 may be a secondary assembly, and the stator assembly 1a may be a primary assembly.

In some embodiments, the mover assembly 41 may be a primary assembly, and the stator assembly 1a may be a secondary assembly. In this case, the mover assembly 41 includes the motor housing 411, a stator core 1, and a stator coil 2. The stator core 1 is fixed on the motor housing 411, the stator coil 2 is arranged on the stator core 1, and the stator assembly 1a includes magnetic steel 412. Alternatively, the mover assembly 41 may be a secondary assembly, and the stator assembly 1a may be a primary assembly. The mover assembly 41 includes the motor housing 411 and magnetic steel 412. The magnetic steel 412 is mounted on the inner wall of the motor housing 411. The stator assembly 1a includes a stator core 1 and a stator coil 2, and the stator coil 2 is mounted on the stator core 1.

According to the linear motor 100 according to the embodiment of the present invention, the foregoing stator assembly 1a is arranged. A wire passing slot 13 configured to avoid a bridge wire 22 is provided on an outer peripheral wall of a stator core 1. In addition, in a circumferential direction of the stator core 1, a projection of a first core convex portion 111 on a first reference plane is a first projection, a projection of a first phase bridge wire 221 on the first reference plane is a second projection, a projection of a second phase bridge wire 222 on the first reference plane is a third projection, and a maximum length of the first projection in a reference direction is less than a minimum distance between the second projection and the third projection. In this way, assembly of a stator coil 2 and the stator core 1 can be convenient, possibility of the stator core 1 causing damage to the bridge wire 22 during the assembly of the stator core 1 and the stator coil 2 can be reduced, and an overall structure of the stator assembly 1a can be compact.

Referring to FIG. 1, according to an embodiment of a third aspect of the present invention, an electromagnetic suspension includes the linear motor 100 according to the embodiment of the foregoing second aspect of the present invention. When the linear motor 100 is used in an electromagnetic suspension of a vehicle, a stator assembly 1a may be connected to a vehicle body, and a mover assembly 41 may be connected to a wheel. For example, an upper end of the stator assembly 1a is connected to the vehicle body, and a lower end of the mover assembly 41 is connected to the wheel.

According to the electromagnetic suspension of the embodiment of the present invention, the foregoing linear motor 100 is arranged, and the linear motor 100 includes the stator assembly 1a. A wire passing slot 13 configured to avoid a bridge wire 22 is provided on an outer peripheral wall of a stator core 1. In addition, in a circumferential direction of the stator core 1, a projection of a first core convex portion 111 on a first reference plane is a first projection, a projection of a first phase bridge wire 221 on the first reference plane is a second projection, a projection of a second phase bridge wire 222 on the first reference plane is a third projection, and a maximum length of the first projection in a reference direction is less than a minimum distance between the second projection and the third projection. In this way, assembly of a stator coil 2 and the stator core 1 can be convenient, possibility of the stator core 1 causing damage to the bridge wire 22 during the assembly of the stator core 1 and the stator coil 2 can be reduced, and an overall structure of the stator assembly 1a can be compact.

Referring to FIG. 1, according to an embodiment of a fourth aspect of the present invention, a vehicle includes the electromagnetic suspension according to the embodiment of the foregoing third aspect of the present invention.

According to the vehicle according to the embodiment of the present invention, the foregoing electromagnetic suspension is arranged, the electromagnetic suspension includes a linear motor 100, and the linear motor 100 includes a stator assembly 1a. A wire passing slot 13 configured to avoid a bridge wire 22 is provided on an outer peripheral wall of a stator core 1. In addition, in a circumferential direction of the stator core 1, a projection of a first core convex portion 111 on a first reference plane is a first projection, a projection of a first phase bridge wire 221 on the first reference plane is a second projection, a projection of a second phase bridge wire 222 on the first reference plane is a third projection, and a maximum length of the first projection in a reference direction is less than a minimum distance between the second projection and the third projection. In this way, assembly of a stator coil 2 and the stator core 1 can be convenient, possibility of the stator core 1 causing damage to the bridge wire 22 during the assembly of the stator core 1 and the stator coil 2 can be reduced, and an overall structure of the stator assembly 1a can be compact.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present invention. In this specification, schematic descriptions of the foregoing terms do not necessarily refer to a same embodiment or example. Moreover, the specific characteristics, structures, materials, or features described may be combined in any one or more embodiments or examples in an appropriate manner.

As discussed, embodiments may provide a stator assembly, comprising: a stator core having a plurality of sub-cores arranged in an axial direction, a stator slot being provided between two adjacent sub-cores and a stator coil, mounted on the stator core and including at least three phases of coils, each phase of coil comprising a pancake coil and a bridge wire, the pancake coil being accommodated in the stator slot, wherein pancake coils of a same phase located in different stator slots (are connected by corresponding bridge wires, and wherein the bridge wires of the at least three phases of coils are arranged at intervals in a circumferential direction of the stator core and comprise a first phase bridge wire, a second phase bridge wire, and a third phase bridge wire, wherein a wire passing slot for a respective bridge wire to pass through is provided on an outer peripheral wall of each sub-core, a portion of the sub-core located between two adjacent wire passing slots in a circumferential direction of the sub-core is a core convex portion, a core convex portion located between the first phase bridge wire and the second phase bridge wire is a first core convex portion, a midpoint of the first core convex portion in the circumferential direction of the sub-core is a first convex block midpoint, a line connecting a center of the sub-core and the first convex block midpoint is a first radial reference line, a plane perpendicular to the first radial reference line is a first reference plane, a projection of the first core convex portion on the first reference plane is a first projection, a projection of the first phase bridge wire on the first reference plane is a second projection, a projection of the second phase bridge wire on the first reference plane is a third projection, a maximum length of the first projection in a reference direction is less than a minimum distance between the second projection and the third projection, and the reference direction is perpendicular to the first radial reference line and is perpendicular to the axial direction of the stator core.

In some embodiments, the stator assembly includes: a first phase sub-assembly, a second phase sub-assembly, and a third phase sub-assembly, wherein the first phase sub-assembly includes a first phase coil and a first phase sub-core, the first phase coil including a first phase pancake coil and a first phase bridge wire, the first phase bridge wire connecting multiple first phase pancake coils successively arranged in the axial direction, and the first phase sub-core supporting the first phase pancake coil; wherein the second phase sub-assembly includes a second phase coil and a second phase sub-core, the second phase coil including a second phase pancake coil and a second phase bridge wire, the second phase bridge wire connecting multiple second phase pancake coils successively arranged in the axial direction, and the second phase sub-core supporting the second phase pancake coil; wherein the third phase sub-assembly includes a third phase coil and a third phase sub-core, the third phase coil including a third phase pancake coil and a third phase bridge wire, the third phase bridge wire connecting multiple third phase pancake coils successively arranged in the axial direction, and the third phase sub-core supporting the third phase pancake coil.

The first phase bridge wire and the second phase bridge wire may be respectively located in a first wire passing slot for the first phase and a second wire passing slot for the second phase.

The first core convex portion between the first phase wire passing slot and the second phase wire passing slot on the third phase sub-core may pass through space between the first phase bridge wire and the second phase bridge wire.

In some embodiments, the first phase bridge wire and the second phase bridge wire may be distributed at 120°.

As discussed, embodiments may provide a method of manufacturing a stator assembly, the method comprising: providing a stator core having a plurality of sub-cores arranged in an axial direction, a stator slot being provided between two adjacent sub-cores; providing a stator coil, wherein the stator coil comprises at least three phases of coils, each phase of coil comprising a pancake coil and a bridge wire; wherein the method comprises accommodating the pancake coil of each phase of coil in a respective stator slot, wherein pancake coils of a same phase located in different stator slots are connected by corresponding bridge wires, and wherein the bridge wires of the at least three phases of coils are arranged at intervals in a circumferential direction of the stator core and comprise a first phase bridge wire, a second phase bridge wire, and a third phase bridge wire, wherein a wire passing slot for a respective bridge wire to pass through is provided on an outer peripheral wall of each sub-core, a portion of the sub-core located between two adjacent wire passing slots in a circumferential direction of the sub-core is a core convex portion, a core convex portion located between the first phase bridge wire and the second phase bridge wire is a first core convex portion, a midpoint of the first core convex portion in the circumferential direction of the sub-core is a first convex block midpoint, a line connecting a center of the sub-core and the first convex block midpoint is a first radial reference line, a plane perpendicular to the first radial reference line is a first reference plane, a projection of the first core convex portion on the first reference plane is a first projection, a projection of the first phase bridge wire on the first reference plane is a second projection, a projection of the second phase bridge wire on the first reference plane is a third projection, a maximum length of the first projection in a reference direction is less than a minimum distance between the second projection and the third projection, and the reference direction is perpendicular to the first radial reference line and is perpendicular to the axial direction of the stator core.

In some embodiments, the stator assembly includes: a first phase sub-assembly, a second phase sub-assembly, and a third phase sub-assembly, wherein the first phase sub-assembly includes a first phase coil and a first phase sub-core, the first phase coil including a first phase pancake coil and a first phase bridge wire, the first phase bridge wire connecting multiple first phase pancake coils successively arranged in the axial direction, and the first phase sub-core supporting the first phase pancake coil; wherein the second phase sub-assembly includes a second phase coil and a second phase sub-core, the second phase coil including a second phase pancake coil and a second phase bridge wire, the second phase bridge wire connecting multiple second phase pancake coils successively arranged in the axial direction, and the second phase sub-core supporting the second phase pancake coil; wherein the third phase sub-assembly includes a third phase coil and a third phase sub-core, the third phase coil including a third phase pancake coil and a third phase bridge wire, the third phase bridge wire connecting multiple third phase pancake coils successively arranged in the axial direction, and the third phase sub-core supporting the third phase pancake coil, and wherein the method further comprises: inserting the second phase sub-assembly into the first phase sub-assembly in a radial direction of the stator core and reserving a space for the third phase sub-assembly to be inserted, and the first phase bridge wire and the second phase bridge wire are respectively located in a first wire passing slot for the first phase and a second wire passing slot for the second phase; inserting the third phase sub-assembly between the assembled first phase sub-assembly and the assembled second phase sub-assembly in the radial direction of the stator core, wherein the first core convex portion between the first phase wire passing slot and the second phase wire passing slot on the third phase sub-core passes through space between the first phase bridge wire and the second phase bridge wire, and wherein during the insertion the first core convex portion on the third phase sub-core does not contact the first phase bridge wire and the second phase bridge wire.

In some embodiments, after assembly of the second phase sub-assembly and the first phase sub-assembly is completed, the first phase bridge wire and the second phase bridge wire are distributed at 120°.

Although the embodiments of the present invention have been shown and described, persons of ordinary skill in the art should understand that various changes, modifications, replacements and variations may be made to the embodiments without departing from the principles of the present invention, and the scope of the present invention is as defined by the appended claims and their equivalents.

In the drawings:
100: linear motor;
1a: stator assembly; 1: stator core; 11: sub-core; 111: core convex portion; 112: first core convex portion; 113: second core convex portion; 114: third core convex portion; 12: stator slot; 13: wire passing slot; 14: slot side edge; 15: slot bottom edge; 16: transition section;
2: stator coil; 21: pancake coil; 22: bridge wire; 221: first phase bridge wire; 222: second phase bridge wire; 223: third phase bridge wire; 23: first phase coil; 24: second phase coil; 25: third phase coil;
3: insulating bracket; 31: bracket body; 32: extension portion; 33: accommodating slot; 34: bracket convex portion; 341: first bracket convex portion; 342: second bracket convex portion; 343: third bracket convex portion; 35: wire passing notch;
41: mover assembly; 411: motor housing; 412: magnetic steel; 51: first bearing; 52: second bearing; 53: stator mandrel; 531: guiding channel; 54: oil seal; and 55: guiding rod.

## Claims

1. A stator assembly (1a), comprising:
a stator core (1) having a plurality of sub-cores (11) arranged in an axial direction, a stator slot (12) being provided between two adjacent sub-cores (11); and
a stator coil (2), mounted on the stator core (1) and including at least three phases of coils, each phase of coil comprising a pancake coil (21) and a bridge wire (22), the pancake coil (21) being accommodated in the stator slot (12), wherein pancake coils (21) of a same phase located in different stator slots (12) are connected by corresponding bridge wires (22), and wherein the bridge wires (22) of the at least three phases of coils are arranged at intervals in a circumferential direction of the stator core (1) and comprise a first phase bridge wire (221), a second phase bridge wire (222), and a third phase bridge wire (223),
wherein a wire passing slot (13) for a respective bridge wire (22) to pass through is provided on an outer peripheral wall of each sub-core (11), a portion of the sub-core (11) located between two adjacent wire passing slots (13) in a circumferential direction of the sub-core (11) is a core convex portion (111), a core convex portion (111) located between the first phase bridge wire (221) and the second phase bridge wire (222) is a first core convex portion (112), a midpoint of the first core convex portion (112) in the circumferential direction of the sub-core (11) is a first convex block midpoint, a line connecting a center of the sub-core (11) and the first convex block midpoint is a first radial reference line, a plane perpendicular to the first radial reference line is a first reference plane, a projection of the first core convex portion (112) on the first reference plane is a first projection, a projection of the first phase bridge wire (221) on the first reference plane is a second projection, a projection of the second phase bridge wire (222) on the first reference plane is a third projection, a maximum length of the first projection in a reference direction is less than a minimum distance between the second projection and the third projection, and the reference direction is perpendicular to the first radial reference line and is perpendicular to the axial direction of the stator core (1).

2. The stator assembly (1a) according to claim 1, wherein a projection of the wire passing slot (13) on a second reference plane is a fourth projection, the second reference plane is perpendicular to the axial direction of the stator core (1), the fourth projection comprises two slot side edges (14) arranged in the circumferential direction of the sub-core (11), and a spacing between the two slot side edges (14) of the fourth projection gradually increases in a radial outward direction from the sub-core (11).

3. The stator assembly (1a) according to claim 2, wherein at least a part of the slot side edge (14) is arc-shaped.

4. The stator assembly (1a) according to claim 2 or 3, wherein the fourth projection comprises a slot bottom edge (15), the slot bottom edge (15) is connected between the two slot side edges (14), and the slot bottom edge (15) extends in a straight line;
optionally wherein a transition section (16) is connected between the slot bottom edge (15) and the slot side edge (14), and the transition section (16) is arc-shaped.

5. The stator assembly (1a) according to any one of claims 1 to 4, wherein the bridge wire (22) is completely accommodated in the corresponding wire passing slot (13) in a radial direction of the sub-core (11).

6. The stator assembly (1a) according to any one of claims 1 to 5, wherein the bridge wire (22) is covered by an insulating layer.

7. The stator assembly (1a) according to any one of claims 1 to 7, wherein the pancake coils (21) of the same phase and the bridge wires (22) connecting the pancake coils (21) of the same phase are integrally formed.

8. The stator assembly (1a) according to any one of claims 1 to 7, wherein the plurality of the sub-cores (11), the plurality of the pancake coils (21), and the bridge wires (22) are bonded together by an adhesive.

9. The stator assembly (1a) according to any one of claims 1 to 8, further comprising: an insulating bracket (3), the insulating bracket (3) being arranged in the stator slot (12) and covers the pancake coil (21);
optionally wherein the insulating bracket (3) comprises a bracket body (31), the bracket body (31) is annular and extends in the circumferential direction of the stator core (1), a wire passing notch (35) configured for the bridge wire (22) to pass through is formed on the bracket body (31), and the wire passing notch (35) is opposite to the wire passing slot (13) in the axial direction of the stator core (1).
further optionally wherein the insulating bracket further comprises an extension portion (32), the extension portion (32) is connected to the bracket body (31) and is located on an axial side of the wire passing notch (35), and at least a part of the extension portion (32) is located in the wire passing slot (13) and is located between the bridge wire (22) and the sub-core (11);
still further optionally wherein the extension portion (32) is recessed toward a center of the bracket body (31), to form an accommodating slot (33) configured to accommodate the bridge wire (22).

10. The stator assembly (1a) according to claim 9, wherein the insulating bracket (3) comprises the bracket body (31), and wherein
a maximum outer diameter of the bracket body (31) is not greater than a maximum outer diameter of the sub-core (11); and/or
a portion of the bracket body (31) located between two adjacent wire passing notches (35) in a circumferential direction of the bracket body (31) is a bracket convex portion (34), a bracket convex portion (34) located between the first phase bridge wire (221) and the second phase bridge wire (222) is a first bracket convex portion (341), a projection of the first bracket convex portion (341) on the first reference plane is a fifth projection, and a maximum length of the fifth projection in the reference direction is less than the minimum distance between the second projection and the third projection.

11. A linear motor (100), comprising:
the stator assembly (1a) according to any one of claims 1 to 10; and
a mover assembly (41), sleeved on an outer periphery of the stator assembly (1a), the mover assembly (41) and the stator assembly (1a) being movable relative to each other.

12. An electromagnetic suspension, comprising: the linear motor (100) according to claim 11.

13. A vehicle, comprising: the electromagnetic suspension according to claim 12.

14. A method of manufacturing a stator assembly (1a), the method comprising:
providing a stator core (1) having a plurality of sub-cores (11) arranged in an axial direction, a stator slot (12) being provided between two adjacent sub-cores (11)
providing a stator coil (2), wherein the stator coil (2) comprises at least three phases of coils, each phase of coil comprising a pancake coil (21) and a bridge wire (22);
wherein the method comprises accommodating the pancake coil (21) of each phase of coil in a respective stator slot (12), wherein pancake coils (21) of a same phase located in different stator slots (12) are connected by corresponding bridge wires (22), and wherein the bridge wires (22) of the at least three phases of coils are arranged at intervals in a circumferential direction of the stator core (1) and comprise a first phase bridge wire (221), a second phase bridge wire (222), and a third phase bridge wire (223),
wherein a wire passing slot (13) for a respective bridge wire (22) to pass through is provided on an outer peripheral wall of each sub-core (11), a portion of the sub-core (11) located between two adjacent wire passing slots (13) in a circumferential direction of the sub-core (11) is a core convex portion (111), a core convex portion (111) located between the first phase bridge wire (221) and the second phase bridge wire (222) is a first core convex portion (112), a midpoint of the first core convex portion (112) in the circumferential direction of the sub-core (11) is a first convex block midpoint, a line connecting a center of the sub-core (11) and the first convex block midpoint is a first radial reference line, a plane perpendicular to the first radial reference line is a first reference plane, a projection of the first core convex portion (112) on the first reference plane is a first projection, a projection of the first phase bridge wire (221) on the first reference plane is a second projection, a projection of the second phase bridge wire (222) on the first reference plane is a third projection, a maximum length of the first projection in a reference direction is less than a minimum distance between the second projection and the third projection, and the reference direction is perpendicular to the first radial reference line and is perpendicular to the axial direction of the stator core (1).

15. A method according to claim 14, wherein the stator assembly includes:
a first phase sub-assembly, a second phase sub-assembly, and a third phase sub-assembly,
wherein the first phase sub-assembly includes a first phase coil (23) and a first phase sub-core, the first phase coil (23) including a first phase pancake coil and a first phase bridge wire (221), the first phase bridge wire (221) connecting multiple first phase pancake coils successively arranged in the axial direction, and the first phase sub-core supporting the first phase pancake coil;
wherein the second phase sub-assembly includes a second phase coil (24) and a second phase sub-core, the second phase coil (24) including a second phase pancake coil and a second phase bridge wire (222), the second phase bridge wire (222) connecting multiple second phase pancake coils successively arranged in the axial direction, and the second phase sub-core supporting the second phase pancake coil;
wherein the third phase sub-assembly includes a third phase coil (25) and a third phase sub-core, the third phase coil (25) including a third phase pancake coil and a third phase bridge wire (223), the third phase bridge wire (223) connecting multiple third phase pancake coils successively arranged in the axial direction, and the third phase sub-core supporting the third phase pancake coil;
wherein the method further comprises:
inserting the second phase sub-assembly into the first phase sub-assembly in a radial direction of the stator core (1) and reserving a space for the third phase sub-assembly to be inserted, and the first phase bridge wire (221) and the second phase bridge wire (222) are respectively located in a first wire passing slot for the first phase and a second wire passing slot for the second phase;
inserting the third phase sub-assembly between the assembled first phase sub-assembly and the assembled second phase sub-assembly in the radial direction of the stator core (1), wherein the first core convex portion (112) between the first phase wire passing slot and the second phase wire passing slot on the third phase sub-core passes through space between the first phase bridge wire (221) and the second phase bridge wire (222), and wherein during the insertion the first core convex portion (112) on the third phase sub-core does not contact the first phase bridge wire (221) and the second phase bridge wire (222).
